(19)

Europäisches
Patentamt

European
Patent Office

Office européen
des brevets

(11)  **EP 2 594 015 B1**

(12)  **EUROPEAN PATENT SPECIFICATION**

(45) Date of publication and mention
of the grant of the patent:
**04.03.2015 Bulletin 2015/10**

(21) Application number: **10732975.7**

(22) Date of filing: **15.07.2010**

(51) Int Cl.:
*H02M 3/335* *(2006.01)*      *H02M 7/483* *(2007.01)*

(86) International application number:
**PCT/EP2010/060260**

(87) International publication number:
**WO 2012/007040 (19.01.2012 Gazette 2012/03)**

(54) **CELL BASED DC/DC CONVERTER**

AUF ZELLEN BASIERENDER DC-DC-WANDLER

CONVERTISSEUR CC/CC À BASE CELLULAIRE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**22.05.2013 Bulletin 2013/21**

(73) Proprietor: **ABB Technology AG
8050 Zürich (CH)**

(72) Inventor: **NORRGA, Staffan
S-118 28 Stockholm (SE)**

(74) Representative: **Lundqvist, Alida Maria Therése
ABB AB
Intellectual Property
Ingenjör Bååths Gata 11
721 83 Västerås (SE)**

(56) References cited:
**WO-A1-2010/069401      CN-A- 101 345 473
CN-A- 101 707 443      JP-A- 2006 304 383
SU-A1- 782 102**

**Description**

FIELD OF INVENTION

The present invention generally relates to DC/DC converters. More particularly the present invention relates to DC/DC converters employing controlled voltage sources made up of cells.

BACKGROUND

Cascaded converter cells, often denoted multilevel converter cells, are of interest in many power transmission applications, for instance in voltage source converters.

These cells provide discrete voltage levels that can be combined for conversion between AC and DC. Each cell is here made up of an energy storage element, typically a capacitor, being connected in series with two switching elements for forming a half-bridge converter cell. These cells typically have two connection terminals, where a first is provided in the junction between the two switching elements and a second in the junction between one of the switching elements and the energy storage element. The placing of the second terminal in the half-bridge cell defines the cell type, where it may be placed at the junction between one of the switching elements and the energy storage element. The placing of the second terminal at a first such junction therefore defines a first type of half-bridge cell, while the placing of the second connection terminal at a second junction defines a second type of cell.

These types of cells are generally described in relation to a voltage source converter in DE 10103031.

The use of such cells in a DC/DC converter is described by Colin Oates in "A methodology for developing 'Chainlink' converters", 13th European Conference on Power Electronics and Applications, 2009. EPE '09, Sept. 2009, page 1 - 10. In this type of converter, strings of cells are configured so as to provide a DC voltage towards a pair of DC terminals. They are also configured so as to provide an AC voltage towards a transformer. At the other side of the transformer, a corresponding conversion is made between an AC voltage and another DC voltage of another pair of DC terminals. Thanks to this transformer a voltage adjustment is possible where the two DC voltages may be of different magnitude. In addition, the two pairs of DC terminals may be galvanically separated from each other. However, the converter described by Oates requires two groups of converter cells on both sides of the transformer, each string being capable of providing the DC voltage and also producing the mentioned AC voltage. This solution may therefore be expensive.

Various DC/DC converter structures that are based on other types of conversion elements than cells are described in for instance SU 782102, US 6,349,044, US 7,061,777 and US 6,771,518.

In view of what has been described above, there is therefore a need for a cell based DC/DC converter, which is more cost efficient than the previously known cell-based DC/DC converter.

SUMMARY OF THE INVENTION

One object of the present invention is to provide a more cost-efficient cell based DC/DC converter.

This object is according to one aspect of the present invention solved through a DC/DC converter comprising

- a first conversion branch stretching between a first and a second DC terminal,
- a first controllable voltage source in a first half of the first conversion branch,
- a second controllable voltage source in a second half of the first conversion branch,
- a conversion unit converting between AC and DC and at one end connected to a third and a fourth DC terminal, and
- a transformer with

  - a primary winding connected in a first interconnecting branch stretching between a first junction at which the first and second controllable voltage sources are connected to each other and a first potential that lies in the middle between the potentials of the first and second DC terminal, and
  - a secondary winding connected to another end of the conversion unit.

The present invention has a number of advantages. It is economical and cost-efficient. This is combined with the output of the converter having a reduced amount of harmonic distortion while also allowing different magnitudes and galvanic separation of the DC voltages.

BRIEF DESCRIPTION OF THE DRAWINGS

The present invention will in the following be described with reference being made to the accompanying drawings, where

fig. 1 schematically shows a DC/DC converter according to the invention connected between two direct current power transmission systems,
fig. 2 schematically shows a DC/DC converter according to a first embodiment of the invention comprising cell-based controllable voltage sources,
fig. 3 schematically shows the structure of a first type of cell for use in a controllable voltage source,
fig. 4 schematically shows the structure of a second type of cell for use in a controllable voltage source,
fig. 5A schematically shows a first type of controllable voltage source,

fig. 5B schematically shows a second type of controllable voltage source,

fig. 5C schematically shows a third type of controllable voltage source,

fig. 6 shows voltage source voltages in a conversion branch of a DC/DC converter as well as a differential mode AC voltage and a common mode DC voltage formed through these voltage source voltages,

fig. 7 schematically shows a DC/DC converter according to a second embodiment of the invention, and

fig. 8 schematically shows a DC/DC converter according to a third embodiment of the invention.

DETAILED DESCRIPTION OF THE INVENTION

In the following, a detailed description of preferred embodiments of a device and a method according to the present invention will be given.

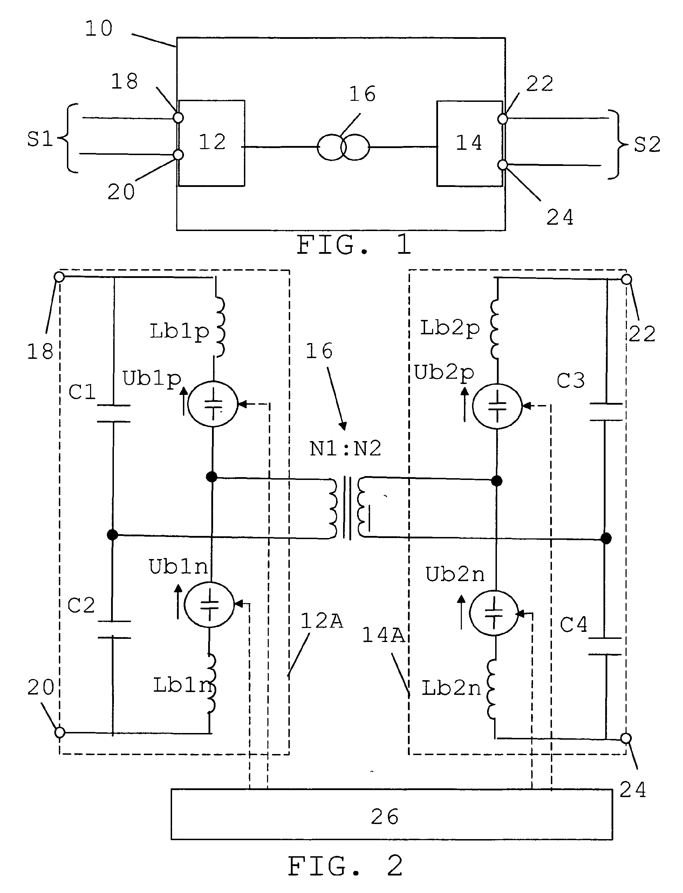

In fig. 1 there is schematically shown a simplified DC/DC converter 10 according to the invention being connected between a first DC system S1 and a second DC system S2. One or both of the DC systems may be high-voltage power transmission systems and then for instance HVDC (High Voltage Direct Current) power transmission systems. It should be realized that the present invention is not limited to such systems, but may be used in relation to other types of power transmission systems.

In the converter 10 there is a first conversion unit 12 arranged to convert between AC and DC connected to a second conversion unit via a transformer 16. Also the second conversion unit 14 is arranged to convert between AC and DC. These two conversion units both have an AC side facing the transformer 16 and a DC side facing a corresponding DC system. The DC side of the first conversion unit 12 here has a first and a second DC terminal 18 and 20 for connection to two power lines of the first DC system S1, while the DC side of the second conversion unit 14 has a third and fourth DC terminal 22 and 24 for connection to two power lines of the second DC system S2. The first and second DC terminals here form a first DC terminal pair, while the third and fourth DC terminals form a second DC terminal pair.

One or both of the DC systems shown in fig. 1 may be a so-called monopole system. However, in the following description they will both be described in terms of bipole systems. It should here realized that these DC systems as such do not form a part of the present invention.

Fig. 2 shows a block schematic outlining an example of a DC/DC converter according to a first embodiment of the invention showing a first variation of the first and second conversion units 12A and 14A, the first conversion unit being connected to the first and second DC terminals 18 and 20, and the second conversion unit being connected to the third and fourth DC terminals 22 and 24. The figure also includes the transformer 16 as well as a control unit 26. The first conversion unit 12A of the DC/DC converter is here a voltage source conversion unit that includes a first conversion branch connected in series between the first and second DC terminal 18 and 20. The first conversion branch furthermore includes a positive and a negative arm connected to each other and at the junction where the arms meet, which is the midpoint of the first conversion branch, a first end of the primary winding of the transformer 16 is connected. The positive arm is here a first half of the first conversion branch while the negative arm is a second half of the first conversion arm. Each arm of the first conversion branch furthermore includes one reactor, Lb1p of the positive arm and Lb1n of the negative arm. In this embodiment these reactors are connected to the DC terminals 18 and 20, respectively. The positive arm furthermore includes a first controllable voltage source Ub1p and the negative arm includes a second controllable voltage source Ub1n, both being connected to a control unit 26 for being controlled.

In the first conversion unit 12A there is furthermore a first capacitor bank, exemplified by a first and a second capacitor C1, C2 connected in series between the first and the second terminals 18 and 20, and in parallel with the first conversion branch. A second end of the primary winding of the transformer 16 is connected to the midpoint of this capacitor bank, i.e. to the junction between the two capacitors C1 and C2. As can be seen in fig. 2, there is therefore a first interconnecting branch stretching between the first conversion branch midpoint and the first capacitor bank midpoint, where the primary winding of the transformer 16 is located in the first interconnecting branch. The capacitances C1 and C2 on the two sides of the capacitor bank midpoint are with advantage of equal size in order to provide a potential at the second end of the primary winding of the transformer 16 that is in the middle between the potentials of the first and second DC terminals 18 and 20.

The second conversion unit 14B is in this first embodiment also a voltage source conversion unit. Therefore it comprises a second conversion branch connected in series between the third and fourth DC terminal 22 and 24. Also this second conversion branch includes a first positive and a second negative arm connected to each other, and at the junction where the arms meet, which is the midpoint of the branch, one end of a secondary winding of the transformer 16 is connected. The positive arm is here a first half of the second conversion branch, while the negative arm is a second half of the second conversion branch. Each arm of the conversion branch furthermore includes one reactor, Lb2p of the positive arm and Lb2n of the negative arm. In this embodiment these reactors are connected to the DC terminals 22 and 24, respectively. Each arm furthermore includes a variable voltage source, Ub2p of the positive arm and Ub2n of the negative arm, both being connected to the control unit 26 for being controlled.

There is also a second capacitor bank, with a third and a fourth capacitor C3, C4 connected in series between the third and the fourth DC terminals 22 and 24, and in parallel with the second conversion branch. A second end of the secondary winding of the transformer 16 is connected to the midpoint of this capacitor bank, i.e. to the junction between the two capacitors C3 and C4. As can be seen in fig. 2, there is therefore a second interconnecting branch stretching between the second conversion branch midpoint and the second capacitor bank midpoint, where the secondary winding of the transformer 16 is located in the second interconnecting branch. The capacitances C3 and C4 on the opposite sides of the second capacitor bank midpoint are with advantage of equal size in order to provide a potential at the second end of the secondary winding that is in the middle between the potentials of the third and fourth DC terminals.

As can be seen in fig. 2, the first and second conversion units are according to this first embodiment provided symmetrically around the transformer in relation to each other. The transformer does furthermore have a turns ratio of N1:N2 between the windings of the primary and secondary side. This allows the provision of DC voltages having different magnitudes.

The control of voltage sources is in fig. 2 indicated by dashed unidirectional arrows stretching from the control unit 26 to the variable voltage sources.

The variable voltage sources are according to the present invention furthermore realized in the form of voltage source converter cells or cells being connected to each other, for instance in series.

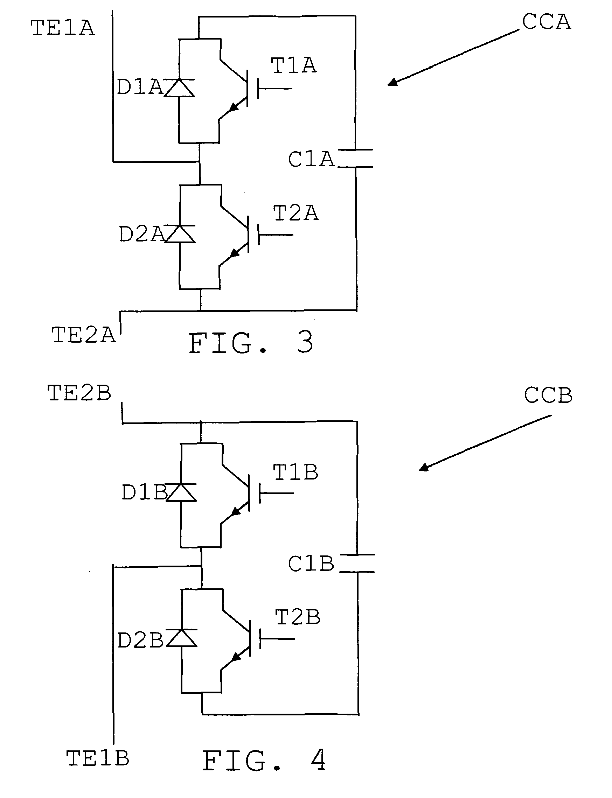

Fig. 3 schematically shows a first type of converter cell CCA that may be used as a building block for forming a controllable voltage source. The cell CCA is a half-bridge converter cell and includes an energy storage element in the form of a capacitor C1A, which is connected in parallel with a branch including two switching elements, where each switching element may be realized in the form of a semiconductor element that may be a transistor, which may with advantage be an IGBT (Insulated Gate Bipolar Transistor) together with an anti-parallel diode. In fig. 3 there is therefore a first switching element having a first transistor T1A with a first diode D1A oriented upwards in the figure and connected in parallel between emitter and collector of the transistor T1A. There is also a second switching element connected in series with the first switching element and having a second diode D2A having the same orientation as the first diode D1A and connected in parallel between emitter and collector of a second transistor T2A. The cell has a first connection terminal TE1A and a second connection terminal TE2A, each providing a connection for the cell to a conversion branch of a conversion unit. In this first type of cell the first connection terminal TE1A more particularly provides a connection from a conversion branch to the junction between the first and the second switching element, while the second terminal TE2A provides a connection from the conversion branch to the junction between the second switching element and the capacitor C1A.

Fig. 4 schematically shows a second type of half-bridge converter cell CCB having the same type of components as the first type and being interconnected in the same way. There is thus here a first switching element having a first transistor T1B and a first anti-parallel diode D1B in series with a second switching element having a second transistor T2B with a second anti-parallel diode D2B. In parallel with these switching elements there is a capacitor C1B, where the first switching element of this second type of cell has the same position and orientation as the first switching element of the first type of cell and the second switching element of this second type has the same position and orientation as the second switching element of the first type of cell. There is also here a first terminal TE1B providing a connection between a conversion branch and the connection point between the first and the second switching elements. However as opposed to the first type of cell, the second terminal TE2B here provides a connection between the conversion branch and the junction between the first switching element and the capacitor C1B.

The cells of the first and second types do always provide a DC component and may therefore be used for conversion between AC and DC. These cells therefore both have unipolar voltage contribution capability, where the actual voltage contribution depends on how the switches are operated and how the cells are oriented in a phase leg. In these cells only one switching element should be turned on at a time and when this happens a cell of a specific type provides a positive or no contribution, i.e. a zero voltage contribution, when being connected with one orientation and a negative contribution when being connected with an opposite orientation. A contribution is here the voltage across the capacitor.

The controllable voltage sources of the first conversion unit are according to the invention made up of a series-connection of a number of such cells. These series-connections or strings can be provided in different ways.

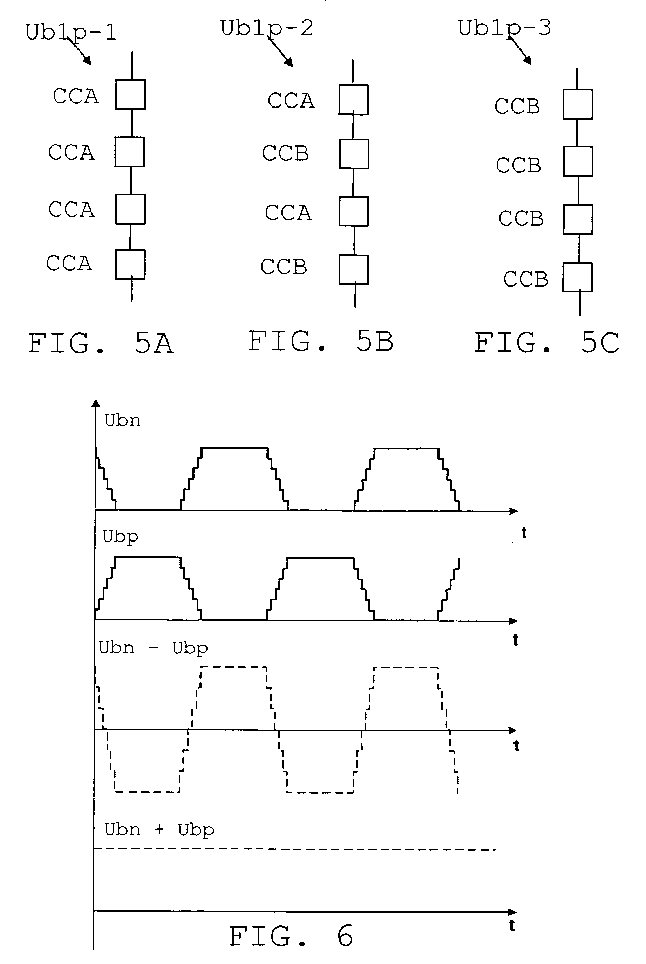

A first type of a voltage source Ub1p-1 is shown in fig. 5A. This voltage source is exemplified by the first voltage source in the positive arm of the first conversion branch in fig. 2. In this first type of voltage source all of the cells are of the first type CCA connected in series with the same orientation. A second type of voltage source Ub1p-2 is shown in fig. 5B. This also includes four cells connected in series. However, this second type of converter includes alternating cells of the first and the second type CCA and CCB alternately placed in series with each other.

A third type of voltage source Ub1p-3 is shown in fig. 5C. In this third type of voltage source all of the cells are of the second type CCB connected in series with the same orientation.

Above, the structure of a voltage source in a positive arm was described. Typically the voltage source of the negative arm will have the same type of cells and structure as the voltage source in the corresponding positive arm. However there may be differences between the types of voltage sources in the first and second conversion units. The voltage sources are furthermore unipolar, which is indicated in fig. 2 through a unipolar arrow above the symbol of the voltage source.

The functioning of the converter will now be described with reference being made to fig. 2 and 6, which latter figure shows a number of voltages associated with a conversion branch, such as the first conversion branch. As seen from the top to the bottom of fig. 6, there is first a voltage of the voltage source Ubn in the negative arm of a conversion branch, followed by the voltage of the voltage source Ubp in the positive arm of the conversion branch. Then follows a differential mode voltage formed through the difference Ubn - Ubp between the voltages of the voltage sources in the negative and positive arm. Finally there is a common mode voltage formed through the sum Ubn + Ubp of the voltages of the voltage sources in the negative and positive arm.

These voltages are applicable for both conversion branches, i.e. they appear on both sides of the transformer, however with different magnitudes.

The control unit 28 controls the voltage sources of a conversion branch through controlling the cells of these voltage sources to provide voltage contributions over time forming the time varying voltages shown in the upper half of fig. 6.

A time-varying voltage can generally be divided into various components, like a DC component and an AC component. An AC component can here include a fundamental AC component as well as harmonic AC components. It is possible to provide such voltage components in a conversion branch using the controllable voltage sources.

If the DC terminals are to have the potentials +Ud and -Ud then the voltage source in the negative arm of the corresponding conversion branch is controlled to provide a voltage

$$Ubn \; = \; Ud \; + \; \tfrac{1}{2} \; Ut,$$

where ½ Ut is the AC voltage contribution.

In the same manner the voltage source in the positive arm of the branch is controlled to provide a voltage

$$Ubp \; = \; Ud \; - \; \tfrac{1}{2} \; Ut$$

This leads to the forming of a differential mode AC voltage Ubn - Ubp = Ut, which is also the voltage at the corresponding transformer winding. This also leads to the forming of a common mode DC voltage Ubn + Ubp = 2Ud, which is the difference in potential between the two DC terminals. These voltages are shown in the lower half of fig. 6.

As can be seen one of the conversion units thus provides a differential AC voltage to one side of the transformer based on the DC voltages on two terminals of a DC terminal pair, which AC voltage is transformed for providing a corresponding AC voltage on the other side of the transformer. This is then used by the other conversion unit in the same way for providing DC voltages on the DC terminals of the other DC terminal pair.

As can be understood there is thus formed a first differential AC voltage $Ut_1$ at the primary winding of the transformer and a second differential AC voltage $Ut_2$ at the secondary winding of the transformer. The difference $Ut_1 - Ut_2$ between these AC voltages will appear across the reactance formed by the sum of the parallel connected branch reactors of both conversion branches and the transformer leakage reactance. By controlling this difference voltage $Ut_1 - Ut_2$ the current flowing through the transformer can be controlled. Hence both the voltage applied to the transformer and the current through the transformer can be controlled. This allows for control of the active power flow through the converter. In practice, since both $Ut_1$ and $Ut_2$ will be AC voltages, the power can be controlled by the phase shift between them.

Through this control the equipment on one side of the transformer therefore acts as an inverter feeding the transformer with an AC voltage whereas the equipment on the other side of the transformer acts as a rectifier turning the transformed AC voltage into a DC voltage again. The capacitors of the capacitor banks should here be sufficiently large to keep the transformer winding connected to the capacitor bank midpoint approximately right between the two DC poles in terms of potential.

The converter according to the first embodiment of the invention has the advantage of being economical and cost-efficient. This is combined with the output of the converter having a reduced amount of harmonic distortion while also allowing different magnitudes and galvanic separation of the DC voltages.

The AC voltage may here have an ordinary AC voltage frequency of 50 or 60 Hz. However, it should here be realized that the converter is not limited to this, but that other frequencies can be employed, for instance higher frequencies such as 100, 200 or even 1000 Hz. One advantage of having a high frequency is that the size and thereby also the cost of the transformer can be reduced.

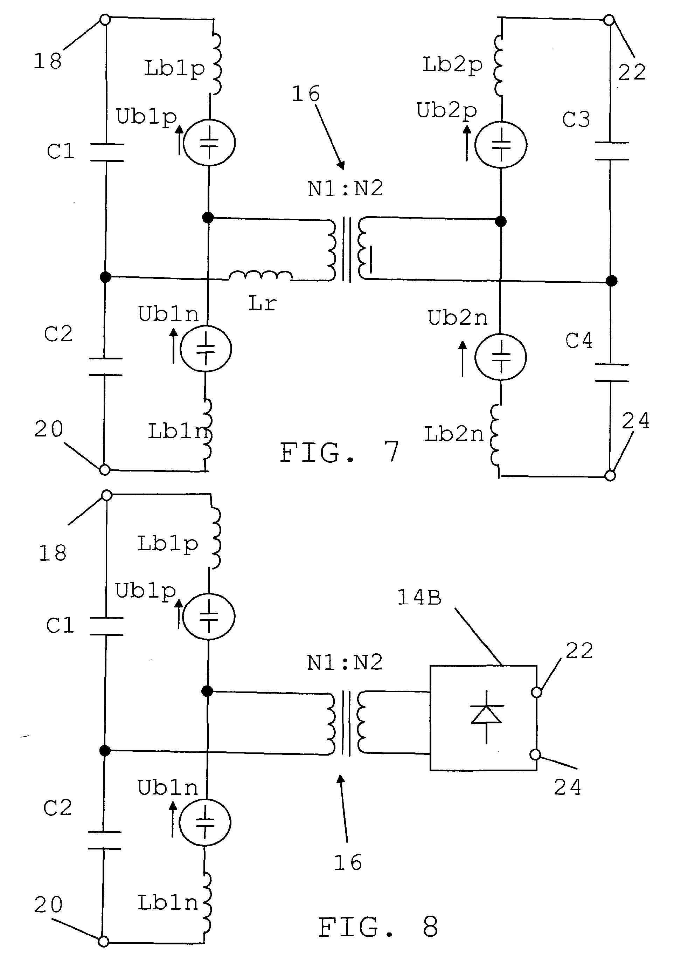

In fig. 7 a second embodiment of the inventions is shown. In this figure the control unit has been omitted. Apart form this there is only one difference. In this second embodiment a further reactor Lr is connected in series with one transformer winding, here the primary winding. This further reactor is thus connected between the first conversion branch midpoint and first capacitor bank midpoint, i.e. in the same first interconnecting branch as the primary winding of the transformer. In this example it is connected between the second end of the primary winding and the mid point of the capacitor bank. However, it may just as well be connected between the conversion branch midpoint and the first end of the primary winding. It should also be realized that a further reactor may additionally or instead in a similar manner be provided in the second conversion unit.

This further reactor Lr can be chosen to form a series resonant circuit together with the capacitors of the first capacitor bank. If the resonance frequency of this circuit is chosen to be the same as that used by the conversion units, the impact of the capacitor bank midpoint voltage ripple can be reduced.

The power flow allowed by the converter according to the first and second embodiments is, as was described above, bidirectional. It is possible to transfer power in both directions. This increases the flexibility of the converter. However, such bidirectional power transfer capability is not always necessary. In some instances it may be of interest to only allow power transfer in one direction, for instance from the first DC system to the second DC system. In this case it is not necessary that the second conversion unit is a cell based voltage source conversion unit. The second conversion unit need thus not be cell based or have the same structure as the first conversion unit.

A third embodiment of the invention directed towards such a situation is shown in fig. 8. The elements on the primary side of the transformer are here the same as in the first embodiment. However the secondary winding of the transformer is here connected to a conversion unit that is a diode rectifier 14B, which may be a diode bridge. A first end of the secondary winding is thus connected to one input terminal of the diode rectifier, while the second end is connected to a second input terminal of the diode rectifier. The diode rectifier also has two output terminals, which also make up the third and fourth output terminals 22 and 24 of the DC/DC converter. The third embodiment of the invention uses a simplified converter in that the control unit (not shown) does not need to control the second conversion unit. This simplifies operation. The use of a diode rectifier instead of a voltage source based conversion unit also allows the provision of a more economical DC/DC converter.

There are a number of variations that are possible to be made of the present invention apart from the variations already mentioned. It should for instance be realized that it is possible to omit reactors from conversion branches. The reactors in the conversion branches may also have other positions than the ones shown. They may for instance be connected to the midpoints instead of to the DC terminals.

The semiconductor elements used in the cells have been described as IGBTs. It should be realized that other types of semiconductor elements may be used, such as thyristors, MOSFET transistors, GTOs (Gate Turn-Off Thyristor) and mercury arc valves. The number of cells of different types and their orientations may furthermore be varied in a multitude of ways depending on the desired functionality and voltage levels.

The control unit need not be provided as a part of the DC/DC converter. It can be provided as a separate device that provides control signals to the DC/DC converter. This control unit may furthermore be realized in the form of a processor with accompanying program memory comprising computer program code that performs the desired control functionality when being run on the processor.

From the foregoing discussion it is evident that the present invention can be varied in a multitude of ways. It shall consequently be realized that the present invention is only to be limited by the following claims.

**Claims**

1. A DC/DC converter (10) comprising

    - a first conversion branch stretching between a first and a second DC terminal (18, 20),
    - a first controllable voltage source (Ub1p) in a first half of the first conversion branch,
    - a second controllable voltage source (Ub1n) in a second half of the first conversion branch,
    - a conversion unit (14) converting between AC and DC and at one end connected to a third and a fourth DC terminal (22, 24), and
    - a transformer (16) with

        - a primary winding connected in a first interconnecting branch stretching between a first junction at which the first and second controllable voltage sources are connected to each other and a first potential that lies in the middle between the potentials of the first and second DC terminal, and
        - a secondary winding connected to another end of the conversion unit,

    **wherein**

        - the first controllable voltage source is made up of a first group of series-connected cells (CCA; CCB) and the second voltage source is made up of a second group of series-connected cells, where each cell is controllable to provide a voltage contribution in the conversion branch, and
        - the first and second voltage sources are controllable to provide a common-mode DC voltage to the first and second DC terminals and a differential mode AC voltage to said junction.

2. A DC/DC converter according to claim 1, wherein each cell has a unipolar voltage contribution capability.

3. A DC/DC converter according to claim 2, wherein the cells of a voltage source are of different types alternately placed in the series-connection.

4. A DC/DC converter according to claim 2, wherein the structure of the first and second voltage sources are the same.

5. A DC/DC converter according to any previous claim, further comprising a first reactor (Lb1p) connected in the first half of the first conversion branch and a second reactor (Lb1n) connected in the second half of the first conversion branch.

6. A DC/DC converter according to any previous claim, further comprising a first capacitor bank (C1, C2) connected between the first and second DC terminals and wherein the interconnecting branch stretches between said first junction and this first capacitor bank midpoint.

7. A DC/DC converter according to claim 6, comprising a further reactor (Lr) in the interconnecting branch.

8. A DC/DC converter according to claim 7, wherein the inductance of the further reactor together with the capacitances of the first capacitor bank are chosen to form a series-resonance circuit.

9. A DC/DC converter (26) according to claim 8, wherein the resonance circuit has a tuning frequency set according to the frequency used by the conversion units.

10. A DC/DC converter (26) according to any previous claim, wherein said conversion unit is a voltage source conversion unit (14A) comprising a second conversion branch stretching between the third and fourth DC terminal (22, 24), a third controllable voltage source (Ub2p) in a first half of the second conversion branch and a fourth controllable voltage source (Ub2n) in a second half of the second conversion branch, where the secondary winding of the transformer is arranged in a second interconnecting branch stretching between a second junction at which the third and fourth controllable voltage sources are connected to each other and a second potential that lies in the middle between the potentials of the third and fourth DC terminals.

11. A DC/DC converter according to claim 11, further comprising a second capacitor bank (C3, C4) connected between the third and fourth DC terminals and where the secondary winding of the transformer is connected between said second junction and this second capacitor bank midpoint.

12. A DC/DC converter (26) according to claim 11 or 12, further comprising a third reactor (Lb2p) connected in the first half of the second branch and a fourth reactor (Lb2n) connected in the second half of the second branch.

13. A DC/DC converter according to any of claims 10 - 12, further comprising a control unit (26) configured to control the power flow through the DC/DC converter through controlling a difference between said differential mode AC voltage, which appears at the primary winding of the transformer, and a corresponding voltage appearing at the secondary winding of the transformer.

14. A DC/DC converter (26) according to any of claims 1 - 9, wherein the conversion unit is a diode rectifier (14B).

**Patentansprüche**

1. Gleichstrom-Gleichstrom-Wandler (10), umfassend

- einen ersten Wandlungszweig, der sich zwischen einem ersten und einem zweiten Gleichstrom-Anschluss (18, 20) erstreckt,
- eine erste steuerbare Spannungsquelle (Ub1p) in einer ersten Hälfte des ersten Wandlungszweigs,
- eine zweite steuerbare Spannungsquelle (Ub1n) in einer zweiten Hälfte des ersten Wandlungszweigs,
- eine Wandlungseinheit (14), die zwischen Wechselstrom und Gleichstrom umwandelt und an einem Ende mit einem dritten und einem vierten Gleichstrom-Anschluss (22, 24) verbunden ist, und
- einen Transformator (16) mit

- einer Primärwicklung, die in einen ersten Zwischenverbindungszweig geschaltet ist, der sich zwischen einem ersten Knoten, an dem die erste und zweite steuerbare Spannungsquelle miteinander verbunden sind, und einem ersten Potential, das in der Mitte zwischen den Potentialen des ersten und des zweiten Gleichstrom-Anschlusses liegt, erstreckt, und
- eine Sekundärwicklung, die mit einem anderen Ende der Wandlungseinheit verbunden ist,

**wobei**

- die erste steuerbare Spannungsquelle aus einer ersten Gruppe von in Reihe geschalteten Zellen (CCA; CCB) besteht und die zweite Spannungsquelle aus einer zweiten Gruppe von in Reihe geschalteten Zellen besteht, wobei jede Zelle steuerbar ist, einen Spannungsbeitrag in dem Wandlungszweig bereitzustellen, und

- die erste und die zweite Spannungsquelle steuerbar sind, eine Gleichtakt-Gleichspannung an die ersten und zweiten Gleichstrom-Anschlüsse und eine Differenz-Wechselspannung an den Knoten zu liefern.

2. Gleichstrom-Gleichstrom-Wandler nach Anspruch 1, wobei jede Zelle eine Fähigkeit zu einem unipolaren Spannungsbeitrag aufweist.

3. Gleichstrom-Gleichstrom-Wandler nach Anspruch 2, wobei die Zellen einer Spannungsquelle aus unterschiedlichen, in der Reihenschaltung wechselweise platzierten Typen bestehen.

4. Gleichstrom-Gleichstrom-Wandler nach Anspruch 2, wobei die Struktur der ersten und der zweiten Spannungsquelle gleich ist.

5. Gleichstrom-Gleichstrom-Wandler nach einem der vorhergehenden Ansprüche, ferner umfassend eine erste Drossel (Lb1p), die in die erste Hälfte des ersten Wandlungszweigs geschaltet ist, und eine zweite Drossel (Lb1n), die in die zweite Hälfte des ersten Wandlungszweigs geschaltet ist.

6. Gleichstrom-Gleichstrom-Wandler nach einem der vorhergehenden Ansprüche, ferner umfassend eine erste Kondensatorbank (C1, C2), die zwischen die ersten und die zweiten Gleichstrom-Anschlüsse geschaltet ist, und wobei der Zwischenverbindungszweig sich zwischen dem ersten Knoten und dem Mittenabgriff dieser ersten Kondensatorbank erstreckt.

7. Gleichstrom-Gleichstrom-Wandler nach Anspruch 6, umfassend eine weitere Drossel (Lr) in dem Zwischenverbindungszweig.

8. Gleichstrom-Gleichstrom-Wandler nach Anspruch 7, wobei die Induktivität der weiteren Drossel zusammen mit den Kapazitäten der ersten Kondensatorbank so gewählt wird, dass sie einen Reihenschwingkreis bilden.

9. Gleichstrom-Gleichstrom-Wandler (26) nach Anspruch 8, wobei der Schwingkreis eine Abstimmfrequenz aufweist, die gemäß der von den Wandlereinheiten verwendeten Frequenz eingestellt wird.

10. Gleichstrom-Gleichstrom-Wandler (26) nach einem der vorhergehenden Ansprüche, wobei die Wandlungseinheit eine Spannungszwischenkreiswandlungseinheit (14A) ist, die einen zweiten Wandlungszweig, der sich zwischen dem dritten und dem vierten Gleichstrom-Anschluss (22, 24) erstreckt, eine dritte steuerbare Spannungsquelle (Ub2p) in einer ersten Hälfte des zweiten Wandlungszweigs und eine vierte steuerbare Spannungsquelle (Ub2n) in einer zweiten Hälfte des zweiten Wandlungszweigs umfasst, wobei die Sekundärwicklung des Transformators in einem zweiten Zwischenverbindungszweig angeordnet ist, der sich zwischen einem zweiten Knoten, an dem die dritte und die vierte steuerbare Spannungsquelle miteinander verbunden sind, und einem zweiten Potential, das in der Mitte zwischen den Potentialen des dritten und vierten Gleichstrom-Anschlusses liegt, erstreckt.

11. Gleichstrom-Gleichstrom-Wandler nach Anspruch 11, ferner umfassend eine zweite Kondensatorbank (C3, C4), die zwischen den dritten und vierten Gleichstrom-Anschluss geschaltet ist, und wobei die Sekundärwicklung des Transformators zwischen den zweiten Knoten und den Mittenabgriff dieser Kondensatorbank geschaltet ist.

12. Gleichstrom-Gleichstrom-Wandler (26) nach Anspruch 11 oder 12, ferner umfassend eine dritte Drossel (Lb2p), die in die erste Hälfte des zweiten Zweigs geschaltet ist, und eine vierte Drossel (Lb2n), die in die zweite Hälfte des zweiten Zweigs geschaltet ist.

13. Gleichstrom-Gleichstrom-Wandler nach einem der Ansprüche 10-12, ferner umfassend eine Steuereinheit (26), die dafür ausgelegt ist, den Leistungsfluss durch den Gleichstrom-Gleichstrom-Wandler durch Steuern einer Differenz zwischen der Differenz-Wechselspannung, die an der Primärwicklung des Transformators auftritt, und einer entsprechenden Spannung, die an der Sekundärwicklung des Transformators auftritt, zu steuern.

14. Gleichstrom-Gleichstrom-Wandler (26) nach einem der Ansprüche 1 - 9, wobei die Wandlungseinheit ein Diodengleichrichter (14B) ist.

**Revendications**

1. Convertisseur CC/CC (10), comprenant :

- une première branche de conversion s'étendant entre une première et une deuxième borne CC (18, 20),
- une première source de tension commandable (Ub1p) dans une première moitié de la première branche de conversion,

- une deuxième source de tension commandable (Ub1n) dans une deuxième moitié de la première branche de conversion,

- une unité de conversion (14) convertissant entre CA et CC et connectée, à une extrémité, à une troisième et une quatrième borne CC (22, 24), et

- un transformateur (16) comportant

- un enroulement primaire connecté dans une première branche d'interconnexion s'étendant entre une première jonction au niveau de laquelle les première et deuxième sources de tension commandables sont connectées l'une à l'autre et un premier potentiel qui s'inscrit à mi-chemin entre les potentiels de la première et de la deuxième borne CC, et

- un enroulement secondaire connecté à une autre extrémité de l'unité de conversion,

**dans lequel**

- la première source de tension commandable est constituée d'un premier groupe de cellules connectées en série (CCA ; CCB) et la deuxième source de tension est constituée d'un deuxième groupe de cellules connectées en série, chaque cellule étant commandable pour apporter une contribution de tension dans la branche de conversion, et

- les première et deuxième sources de tension sont commandables pour appliquer une tension CC en mode commun aux première et deuxième bornes CC et une tension CA en mode différentiel à ladite jonction.

2. Convertisseur CC/CC selon la revendication 1, dans lequel chaque cellule possède une capacité de contribution de tension unipolaire.

3. Convertisseur CC/CC selon la revendication 2, dans lequel les cellules d'une source de tension sont de types différents, placés en alternance dans la connexion en série.

4. Convertisseur CC/CC selon la revendication 2, dans lequel la structure des première et deuxième sources de tension est identique.

5. Convertisseur CC/CC selon l'une quelconque des revendications précédentes, comprenant en outre une première bobine inductance (Lb1p) connectée dans la première moitié de la première branche de conversion et une deuxième bobine d'inductance (Lb1n) connectée dans la deuxième moitié de la première branche de conversion.

6. Convertisseur CC/CC selon l'une quelconque des revendications précédentes, comprenant en outre une première batterie de condensateurs (C1, C2) connectée entre les première et deuxième bornes CC, la branche d'interconnexion s'étendant entre ladite première jonction et le milieu de cette première batterie de condensateurs.

7. Convertisseur CC/CC selon la revendication 6, comprenant une autre bobine d'inductance (Lr) dans la branche d'interconnexion.

8. Convertisseur CC/CC selon la revendication 7, dans lequel l'inductance de l'autre bobine d'inductance ainsi que les capacités de la première batterie de condensateurs sont choisies de manière à former un circuit résonant série.

9. Convertisseur CC/CC (26) selon la revendication 8, dans lequel le circuit résonant possède une fréquence d'accord réglée en fonction de la fréquence utilisée pour les unités de conversion.

10. Convertisseur CC/CC (26) selon l'une quelconque des revendications précédentes, dans lequel ladite unité de conversion est une unité de conversion de source de tension (14A) comprenant une deuxième branche de conversion s'étendant entre la troisième et la quatrième borne CC (22, 24), une troisième source de tension commandable (Ub2p) dans une première moitié de la deuxième branche de conversion et une quatrième source de tension commandable (Ub2n) dans une deuxième moitié de la deuxième branche de conversion, le deuxième enroulement du transformateur étant placé dans une deuxième branche d'interconnexion s'étendant entre une deuxième jonction au niveau de laquelle les troisième et quatrième sources de tension commandables sont connectées l'une à l'autre et un deuxième potentiel qui s'inscrit à mi-chemin entre les potentiels des troisième et quatrième bornes CC.

11. Convertisseur CC/CC selon la revendication 11, comprenant en outre une deuxième batterie de condensateurs (C3, C4) connectée entre les troisième et quatrième bornes CC, le deuxième enroulement du transformateur étant connecté entre ladite deuxième fonction et le milieu de cette deuxième batterie de condensateurs.

12. Convertisseur CC/CC (26) selon la revendication 11 ou 12, comprenant en outre une troisième bobine d'inductance (Lb2p) connectée dans la première moitié de la deuxième branche et une quatrième bobine d'inductance (Lb2n) connectée dans la deuxième moitié de la deuxième branche.

13. Convertisseur CC/CC selon l'une quelconque des revendications 10 à 12, comprenant en outre une unité de commande (26) configurée pour commander le flux d'énergie traversant le convertisseur CC/CC par commande d'une différence entre ladite tension CA en mode différentiel, apparaissant à l'enroulement primaire du transformateur, et une tension correspondance apparaissant à l'enroulement secondaire du transformateur.

14. Convertisseur CC/CC (26) selon l'une quelconque des revendications 1 à 9, dans lequel l'unité de conversion est un redresseur à diodes (14B).

FIG. 1

FIG. 2

TE1A

D1A  T1A

C1A

D2A  T2A

CCA

TE2A

FIG. 3

TE2B

D1B  T1B

C1B

D2B  T2B

CCB

TE1B

FIG. 4

Ub1p-1

CCA ☐

CCA ☐

CCA ☐

CCA ☐

FIG. 5A

Ub1p-2

CCA ☐

CCB ☐

CCA ☐

CCB ☐

FIG. 5B

Ub1p-3

CCB ☐

CCB ☐

CCB ☐

CCB ☐

FIG. 5C

Ubn

t

Ubp

t

Ubn − Ubp

t

Ubn + Ubp

t

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10103031
- US 6349044 B
- US 7061777 B
- US 6771518 B

**Non-patent literature cited in the description**

- **COLIN OATES.** A methodology for developing 'Chainlink' converters. *13th European Conference on Power Electronics and Applications, 2009. EPE '09,* September 2009, 1-10